Europäisches Patentamt

European Patent Office

Office européen des brevets

(11) Veröffentlichungsnummer: **0 209 619 B1**

(12) **EUROPÄISCHE PATENTSCHRIFT**

(45) Veröffentlichungstag der Patentschrift: 27.12.90

(21) Anmeldenummer: 85113109.4

(22) Anmeldetag: 16.10.85

(51) Int. Cl.⁵: **B 23 Q 3/155**

(54) **Werkzeugwechsler.**

(30) Priorität: 21.06.85 DE 3522156
09.10.85 DE 3536048

(43) Veröffentlichungstag der Anmeldung:
28.01.87 Patentblatt 87/05

(45) Bekanntmachung des Hinweises auf die
Patenterteilung:
27.12.90 Patentblatt 90/52

(84) Benannte Vertragsstaaten:
DE FR GB IT

(56) Entgegenhaltungen:
DE-A-2 331 630
FR-A- 948 436
SU-A- 255 746
US-A-4 432 692

PATENT ABSTRACTS OF JAPAN, Band 8, Nr.
263 (M-342)1700r, 4. Dezember 1984; & JP-A-59
134 631 (MAZDA K.K.) 02-08-1984

(73) Patentinhaber: Burkhardt + Weber GmbH
Burkhardt + Weber Strasse 57
D-7410 Reutlingen (DE)

(72) Erfinder: Christner, Walter
Karlstrasse 15
D-7435 Hülben (DE)
Erfinder: Häussler, Peter
Elsterweg 99
D-7417 Pfullingen (DE)

(74) Vertreter: Patentanwälte Phys. Bartels Dipl.-Ing.
Fink Dr.-Ing. Held
Lange Strasse 51
D-7000 Stuttgart 1 (DE)

(56) Entgegenhaltungen:
PATENT ABSTRACTS OF JAPAN, Band 7, Nr.
128 (M-220)1273r, 3. Juni 1983; & JP-A-58 45 837
(OKUMA TEKKOSHO K.K.) 17-03-1983

THE OFFICIAL GAZETTE OF THE UNITED
STATES PATENT OFFICE, Band 203, Nr. 2, 9.
Juni 1914, Seite 559, Washington, US;
Zusammenfassung des Patentes US-A-1 099 874

Courier Press, Leamington Spa, England.

**Beschreibung**

Die Erfindung betrifft einen Werkzeugwechsler für eine Werkzeugmaschine, insbesondere für ein Bohr- und Fräswerk, mit einem eine Greifervorrichtung tragenden Grundkörper, der zum Herausziehen der von der Greifervorrichtung erfaßten Werkzeuge von einem Antrieb aus einer hinteren Stellung in eine vordere Stellung axial verschiebbar, in dieser um seine Achse drehbar und in der gedrehten Stellung zum Einsetzen der ausgewechselten Werkzeuge wieder in seine hintere Stellung zurück verschiebbar ist, wobei für die Axialbewegung des Grundkörpers an diesem eine Zahnstange vorhanden ist, die mit einem Ritzel kämmt, das vom Antrieb antreibbar ist.

Durch das Dokument SU-A-255746 ist ein Werkzeugwechsler der oben genannten Art bekannt. Bei diesem bekannten Werkzeugwechsler sind für die Axialverschiebung des Grundkörpers und für seine Drehung je zwei verschiedene Zahnstangengetriebe vorgesehen, die vom gleichen Antrieb antreibbar sind.

Der Erfindung liegt die Aufgabe zugrunde, für den Werkzeugwechsler eine Bauweise anzugeben, die eine einfach steuerbare und genaue Betriebsweise des Werkzeugwechslers gewährleistet.

Diese Aufgabe ist durch einen Werkzeugwechsler mit den eingangs genannten Merkmalen dadurch gelöst, daß die Zahnstangen entsprechend der gewünschten Axial- und Drehbewegung des Grundkörpers geformt ist und daß für das Ritzel eine Führung vorhanden ist, die das Ritzel im Eingriff mit der Zahnstange hält.

Dadurch wird erreicht, daß das Getriebe für den Antrieb des Grundkörpers weniger verschleißanfällige Teile und eine wesentlich vereinfachte Bauweise aufweist. Auch wird durch die sich durch die getrennten Antriebe für die Axialbewegung und Drehbewegung des Grundkörpers bei bekannten Werkzeugwechslern ergebende höhere Anfälligkeit für Störungen wesentlich verringert.

Durch die FR-A-948.436 ist es zwar bekannt, die translatorische Hi- und Herbewegung eines Bauteils, zum Beispiel des Kolbens einer Pumpe, eines Kompressors oder eines Motors in eine Rotationsbewegung und umgekehrt mittels eines Getriebes umzuwandeln, das aus einem in sich geschlossenen Zahnkranz und einem Ritzel besteht, das durch eine Führung im Eingriff mit dem Zahnkranz gehalten wird. Dieses bekannte Getriebe ist jedoch für die komplizierte Bewegung nicht anwendbar, die die Greifervorrichtung eines Werkzeug-wechslers durchführen muß. Die Schwenkbewegung des translatorisch bewegten Bauteils im Bereich der Endpunkte des Hubes hat bei dem bekannten Getriebe nur Bedeutung für die Umlenkung der Hin- und Herbewegung. Bei der erfindungsgemäßen Greifervorrichtung wird hingegen bewußt der translatorischen Bewegung des Bauteiles eine definierte Drehbewegung zugeordnet.

Damit die vom Grundkörper getragene Greifervorrichtung bei der nach hinten zurückgezogenen Stellung des Grundkörpers eine in Bezug auf die auszuwechselnden Werkzeuge genau definierte Stellung einnimmt, ist es vorteilhaft, für den Grundkörper einen Anschlag vorzusehen. Dieser Anschlag hat jedoch zur Folge, daß der Antrieb des Ritzels sehr genau gesteuert werden muß, damit der Stillstand des Antriebes genau in dem Zeitpunkt erfolgt, in dem der Grundkörper den Anschlag erreicht hat.

Bei einer vorteilhaften Weiterbildung der Erfindung ist daher vorgesehen, daß eine Vorrichtung vorhanden ist, die die Drehbewegung des Grundkörpers in seiner hinteren Stellung verhindert, daß für den Eingriff des Ritzels bei der hinteren Stellung des Grundkörpers eine zweite U-förmig gebogene Zahnstange vorhanden ist, die an einem Ring angeordnet ist, der drehbar und axial unverschiebbar mit dem Grundkörper verbunden ist und für den eine Grundstellung vorgesehen ist, in der die axial verlaufenden Schenkel der zweiten Zahnstange mit den Schenkeln der Zahnstange des Grundkörpers fluchten, und daß die beiden Zahnstangen so dimensioniert sind, daß das Ritzel mit dem sich längs einer zur Drehachse des Grundkörpers senkrechten Ebene erstreckenden Steg der zweiten Zahnstange kämmt, wenn sich der Grundkörper in seiner hinteren Stellung befindet. Dadurch wird erreicht, daß das Ritzel bei der hintersten Stellung des Grundkörpers mit dem Steg der zweiten Zahnstange kämmt, die an dem Ring angeordnet ist, der auf dem Grundkörper drehbar gelagert ist. Ein Weiterdrehen des Ritzels hat dann nicht mehr zur Folge, daß auf den Grundkörper eine axial gerichtete Kraft ausgeübt wird, sondern lediglich, daß der Ring sich auf dem Grundkörper dreht. Man gewinnt dadurch Zeit, um den Antrieb an einer beliebigen Stelle des Steges der zweiten Zahnstange anzuhalten.

Diese Ausführungsform kann vorteilhaft dadurch weitergebildet werden, daß der Ring mit einem Antriebsglied für das Schließen und Öffnen der Greifer versehen ist. Sieht man in dem den Ring mit den Greifern verbindenden Getriebe eine Raststellung vor, dann kommt es nicht so genau auf die Stellung an, in der das Ritzel innerhalb des Zahnstangensteges angehalten wird.

Nach einer weiteren günstigen Ausgestaltung ist für das Ritzel ein Antrieb vorgesehen, der dem Ritzel eine ungleichförmige Bewegung erteilt, so daß die Axial- und Schwenkbewegungen des Grundkörpers schnell und die Durchlaufgeschwindigkeit des Ritzels beim Umlenken langsam sind. Dies ist vor allem dann von Bedeutung, wenn schwere Werkzeuge ausgewechselt werden müssen, da dann durch die beim Umlenken auftretenden Trägheitsmomente der Werkzeugwechsler großen Beanspruchungen ausgesetzt wäre. Der Antrieb zur Erzeugung der ungleichförmigen Rotationsgeschwindigkeit kann als entsprechend steuerbarer Motor oder als Motor mit einem entsprechenden Getriebe, z.B. einem Ovalrädergetriebe, ausgebildet sein.

Bei einer weiteren günstigen Ausgestaltung ist der Grundkörper mit einer Sensorik, mittels deren die Lastaufnahme durch Werkzeuge im Grundkörper meßbar ist, und mit einer durch die Sensorik beeinflußbaren Steuerung versehen, so daß beim Wechsel schwerer Werkzeuge der Antrieb des Ritzels der Masse der auszuwechselnden Werkzeuge anpaßbar ist.

Dadurch wird in einfacher Weise eine der Werkzeugmasse angepaßte Werkzeugwechselgeschwindigkeit erreicht. Schädigungen des Antriebs, des Grundkörpers mit Zahnstange und der tragenden Achse werden dadurch ebenfalls vermieden.

Im folgenden ist die Erfindung an Hand von zwei in den Zeichnungen vereinfacht dargestellten Ausführungsbeispielen von erfindungsgemäßen Werkzeugwechslern im einzelnen erläutert.

Es zeigen.

Fig. 1 einen durch die Achse des Lagerkörpers 4 und der Ritzelwelle 27 definierten Schnitt des ersten Ausführungsbeispiels, wobei der Grundkörper 5 in seiner zurückgezogenen Stellung dargestellt ist;

Fig.2 eine schematisch vereinfachte Draufsicht auf die in einer Ebene abgewickelte zylindrische Außenfläche des Grundkörpers 5;

Fig. 3 die vordere vergrößerte Stirnansicht des Grundkörpers;

Fig. 4 und 5 den Fig. 1 bzw. 2 entsprechende Darstellungen des zweiten Ausführungsbeispiels;

Fig. 6 einen Schnitt nach der Linie VI—VI in Fig. 5, der den drehbaren Ring in Ansicht zeigt.

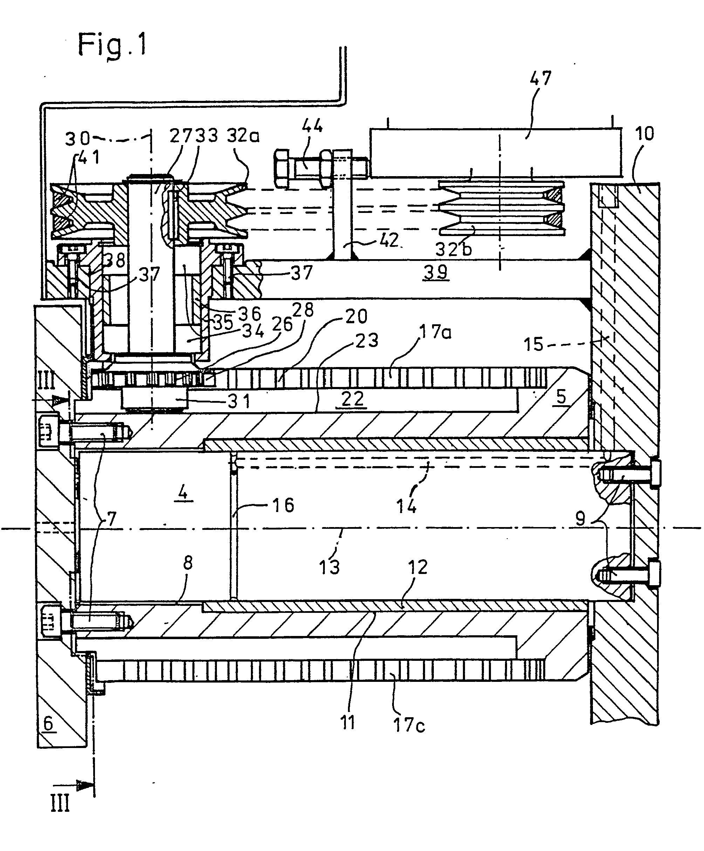

Fig. 1 zeigt den Werkzeugwechsler, der in bekannter Weise in einem Ständer 10 einer Werkzeugmaschine (nicht dargestellt) aufgenommen ist und der einen auf der zylindrischen Außenfläche des Lagerkörpers 4 dreh- und axial verschiebbar gelagerten hohlen Grundkörper 5 aufweist, an dessen vorderem Ende eine Greifervorrichtung 6 durch sechs Schrauben 7 befestigt ist. Die Längsachse des Grundkörpers 5 ist dabei parallel zur Achse der Spindel der Werkzeugmaschine und der Achse des Magazinköchers in der Werkzeugwechselposition (nicht dargestellt). Die Greifervorrichtung 6 ist in bekannter, nicht dargestellter Weise als Doppelgreifer ausgebildet, der durch eine nicht dargestellte Vorrichtung im Lagerkörper 4 betätigbar ist.

Der Grundkörper 5 hat eine zylindrische Außenfläche und weist eine in Richtung seiner Zylinderachse koaxial durchgehende Führungsbohrung 8 auf, die zur Aufnahme des Lagerkörpers 4 vorgesehen ist, der mit seinem hinteren Ende durch vier Schrauben 9 an einer vorderen Anschlagfläche des Ständers 10 mit diesem verbunden ist, so daß die Zylinderachse des Grundkörpers 5 seine Drehachse 13 bildet.

Ausgehend von ihrem hinteren Ende weist die Führungsbohrung 8 eine Erweiterung 11 auf, die sich über etwa drei Viertel ihrer Länge erstreckt und in die eine Gleitlagerbüchse 12 zur Lagerung des Grundkörpers 5 auf dem Lagerkörper 4 eingepreßt ist. Im Lagerkörper 4 ist eine parallel zur Drehachse 13 verlaufende Bohrung 14 vorgesehen, deren hinteres Ende mit einer Schmiermittelzuleitung 15 im Ständer 10 verbunden ist. Das vordere Ende der Bohrung 14 ist mit einer ringförmigen Schmiernut 16 in der Außenfläche des Lagerkörpers 4 verbunden. Die Schmiernut 16 ist in einem solchen Abstand von der Anschlagfläche des Ständers 10 angeordnet, daß sie bei der Axialverschiebung des Grundkörpers 5 die Gleitlagerbüchse 12 immer mit Schmiermittel versorgt.

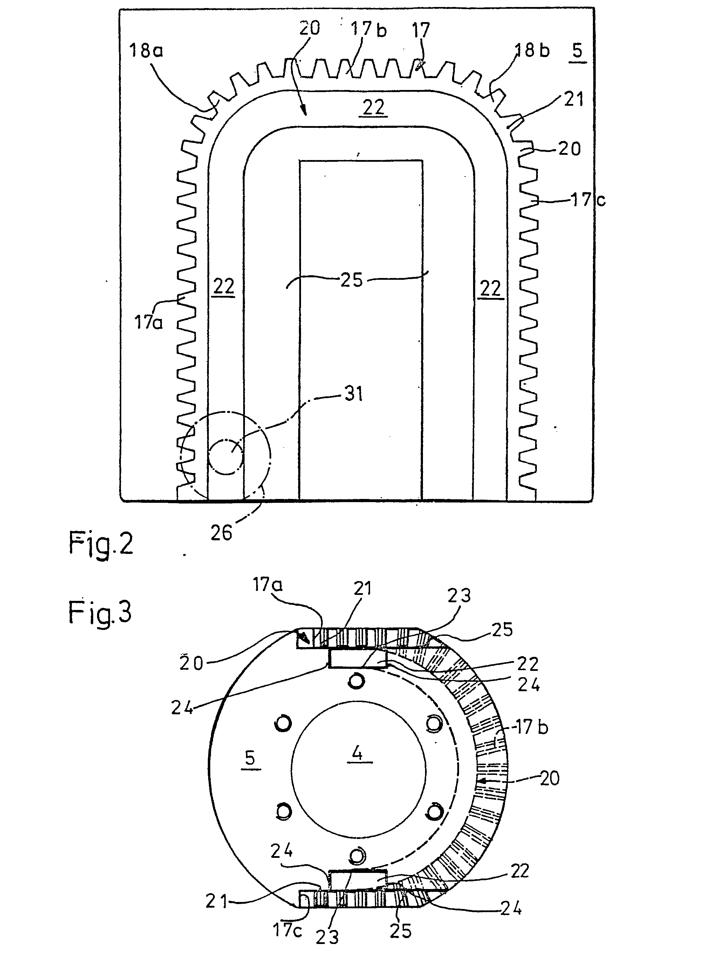

Im Grundkörper 5 ist eine U-förmige Zahnstange 17 vorgesehen, die einen parallel zur Drehachse 13 in Richtung von der Greifervorrichtung 6 an bis zu einer hinteren Umlenkung 18a verlaufenden Schenkel 17a aufweist, der dort um 90° umgelenkt in den Steg 17b der Zahnstange 17 übergeht, der sich in einer zur Drehachse 13 senkrechten Ebene kreisbogenförmig um 180° um die Längsachse 13 erstreckt, bis er in einer weiteren Umlenkung 18b um 90° umgelenkt in den zweiten Schenkel 17c übergeht, der von der hinteren Umlenkung 18b parallel zur Drehachse 13 in Richtung bis zur Greifervorrichtung 6 verläuft (siehe Fig. 2). Diese Zahnstange 17 ist an der einen Seitenwand einer Nut 20 ausgebildet. Auf den den Zahnstangenschenkeln 17a und 17c gegenüberliegenden Seiten ist die Nut 20 nicht begrenzt, so daß dort ein mit dem ebenen Grund 21 der Nut 20 fluchtender Rand 25 vorhanden ist. In dem Grund 21 ist eine zur Zahnstange 20 parallele Rille 22 (Fig. 3) eingelassen, deren Boden 23 parallel zum Grund 21 der Nut 20 ist.

In die Zahnstange 17 greift ein Ritzel 26, das als unterer Teil einer Welle 27 ausgebildet ist, deren Längsachse parallel zu den Seitenwänden 24 der Rille 22 ist. Auf der Welle 27 sitzt unterhalb des Ritzels 26 eine Kurvenrolle 31, die in der Rille 23 geführt ist, wobei der Durchmesser der Kurvenrolle 31 der lichten Weite zwischen den beiden Seitenwänden 24 der Rille 22 entspricht.

Eine Keilriemenscheibe 32a ist über eine Paßfeder 33 mit dem oberen Teil der Welle 27 verbunden. Zwischen der Keilriemenscheibe 32a und dem Ritzel 26 ist die Welle 27 über zwei Kugellager 34 drehbar in einer Büchse 35 gelagert. Die Kugellager 34 sind durch eine Distanzbüchse 36 so auseinandergehalten, daß die beiden Lager in Anlage mit jeweils einer Fläche der Keilriemenscheibe 32a und dem Ritzel 26 kommen. Die Büchse 35 ist dabei über Schrauben 37 in einer zylindrischen Aussparung 3B am vorderen Ende einer platte 39 befestigt, die oberhalb des Grundkörpers 5 mit ihrem hinteren Ende an der vorderen Anschlagfläche des Ständers 10 angeschweißt ist.

Die Keilriemenscheibe 32a und damit die Welle 27 mit dem Ritzel 26 sind über zwei Schmal-Keilriemen 41 von einer zweiten Keilriemenscheibe 32b, die auf einer Abtriebswelle eines Motors 47 sitzt, antreibbar. Der Motor 47 ist in nicht dargestellter Weise in Fig.l von links nach rechts verschiebbar im Ständer 10 gelagert. Auf der Oberseite der Platte 39 ist ein Steg 42 für eine Keilriemenspannschraube 44 vorgesehen, die am Motor 47 angreift.

Bei einem beabsichtigten Werkzeugwechselvorgang wird ein in der Spindel befindliches Werkzeug gegen ein Werkzeug aus dem Werkzeugmagazin ausgetauscht. Als Werkzeugmagazin kann dabei ein Trommelmagazin (nicht dargestellt) Verwendung finden, in dem in bekannter Weise die Werkzeuge in Köchern aufgenommen sind. Für einen Werkzeugwechselvorgang wird das Werkzeug im Köcher in bekannter Weise mittels einer Steuerung über einen Code identifiziert und durch Drehen des Trommelmagazins und gegebenenfalls mit anschließendem Verschwenken des Köchers in die Werkzeugwechselposition derart gebracht, daß das Werkzeug durch eine Greifzange des Doppelgreifers aus dem Köcher entnehmbar ist. Dabei sind die Achse des auszutauschenden Werkzeuges in der Spindel und die Achse des Werkzeuges im Köcher parallel zur Drehachse 13 des Grundkörpers. Für den Greifvorgang werden dann die geöffnete Greifzange, die dem Werkzeug in der Spindel zugeordnet ist und die auch während der Bearbeitung immer im Greifbereich dieses Werkzeuges verbleibt, und die geöffnete Greifzange, in die das Werkzeug im Köcher hineinverschwenkt wurde, geschlossen.

Der eigentliche Werkzeugwechselvorgang beginnt indem die Steuerung nach Schließen der beiden Greifzangen den Motor 47 des Werkzeugwechslers einschaltet. Die Keilriemenscheibe 32b treibt die Keilriemenscheibe 32a und damit die Welle 27 mit dem Ritzel 26 in einer Drehrichtung an, bei der der Grundkörper axial nach vorne (in Fig. 1 nach links) bewegt wird. Bei dieser axialen Vorhubbewegung zieht der Doppelgreifer mit seinen beiden geschlossenen Greifzangen die auszutauschenden Werkzeuge gleichzeitig aus der Spindel und dem Magazinköcher. Hat der Grundkörper 5, seinen äußersten axialen Vorhub erreicht, was der Fall ist, wenn die hintere Umlenkung 18a der Zahnstange 20 am Ritzel 26 angekommen ist, sind die auszutauschenden Werkzeuge vollständig aus der Spindel und dem Köcher entnommen. Nach Durchlaufen dieser Umlenkung 18a dreht das konstant angetriebene Ritzel 26 den Grundkörper 5 um 180°, wobei sich der Zahnstangensteg 17b relativ zum Ritzel bis zur zweiten Umlenkung 18b bewegt. Dieses Drehen des Grundkörpers 5 führt zum Schwenken des Doppelgreifers um 180°, so daß das Werkzeug, das aus dem Köcher entnommen wurde, vor der Spindel und das der Spindel entnommene Werkzeug vor dem Köcher zu liegen kommt. Hat das Ritzel 26 die zweite Umlenkung 18b erreicht, wird die Schwenkbewegung gestoppt und der Grundkörper 5 mit dem Doppelgreifer wieder axial um den gleichen Hub durch den Eingriff des Ritzels 26 in den Zahnstangenschenkel 17c bis zum Anschlag an die Anschlagfläche des Ständers 10 zurückverschoben. Bei dieser axialen Rückhubbewegung werden die ausgetauschten Werkzeuge durch den Doppelgreifer in die Spindelhalterung und in den Köcher des Trommelmagazins eingeführt.

In dieser hintersten Stellung des Grundkörpers 5 löst die Steuerung die Greifzangen, so daß mit dem Werkzeug in der Spindel die Bearbeitung begonnen werden kann, während das ausgetauschte Werkzeug im Köchar des Magazins in seine ursprüngliche Lage zurückverschwenkt wird. Während des gesamten Werkzeugwechselvorganges ist die Welle 27 mit dem Ritzel 26 in der Rille 22 der Nut 20 geführt. Da nach diesem Werkzeugwechselvorgang der Grundkörper 5 mit der Zahnstange 17 um 180° verschwenkt ist, also sich entgegengesetzt der Stellung wie in Fig. 1 dargestellt befindet, muß für den nächsten Werkzeugwechsel der Motor in seinem Drehsinn umgeschaltet werden.

Bei einer besonders günstigen Ausgestaltung des beschriebenen Werkzeugwechslers kann der Motor 47 mit einem Getriebe versehen sein, das die gleichförmige Drehbewegung der Motorwelle in eine ungleichförmige Bewegung der Keilriemenscheibe 32b umwandelt, z.B. ein Ovalrädergetriebe (nicht dargestellt). Durch ein solches Getriebe kann das Übersetzungsverhältnis während eines Werkzeugwechsels so geändert werden, daß die Axial- und Drehbewegungen des Grundkörpers 5 schnell und die Durchlaufgeschwindigkeiten in den Umlenkungen 18a, 18b langsam erfolgen.

Anstelle des eine gleichförmige Drehbewegung in eine ungleichförmige Drehbewegung umwandelnden Getriebes kann der Motor 47 hinsichtlich der Drehzahl und dem Drehsinn steuerbar sein.

Bei einer anderen besonders günstigen Ausgestaltung kann die Lastaufnahme durch die auszutauschenden Werkzeuge über eine im Lagerkörper 4 befindliche Sensorik gemessen werden. Bei dieser Anordnung beeinflußt die Sensorik die Steuerung derart, daß beim Wechsel besonders schwerer Werkzeuge die Abtriebsdrehzahl des Motors 47 gedrosselt wird, so daß der gesamte Werkzeugwechselvorgang langsamer durchgeführt werden kann und somit eine Überbeanspruchung des Werkzeugwechslers vermieden wird.

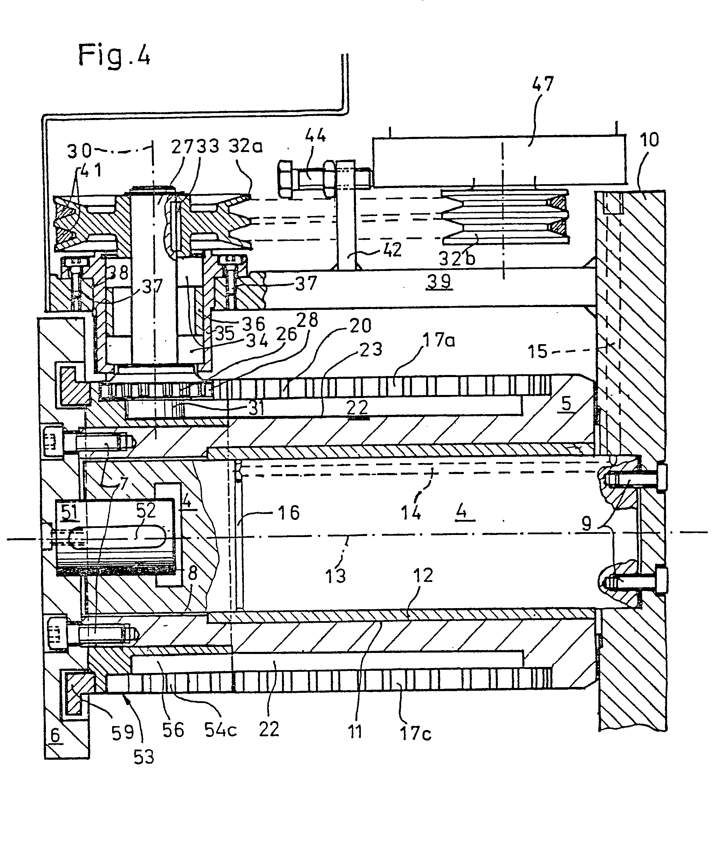

In den Fig. 4 bis 6 ist ein abgewandeltes Ausführungsbeispiel dargestellt, in dem alle Teile, die im wesentlichen den Teilen des Ausführungsbeispiels nach Fig. 1 bis 3 entsprechen, mit den gleichen Bezugszahlen bezeichnet sind.

Im folgenden werden daher nur diejenigen Teile dieses Ausführungsbeispiels beschrieben, durch die sich dies Ausführungsbeispiel von dem vorhergehenden Ausführungsbeispiel unterscheidet.

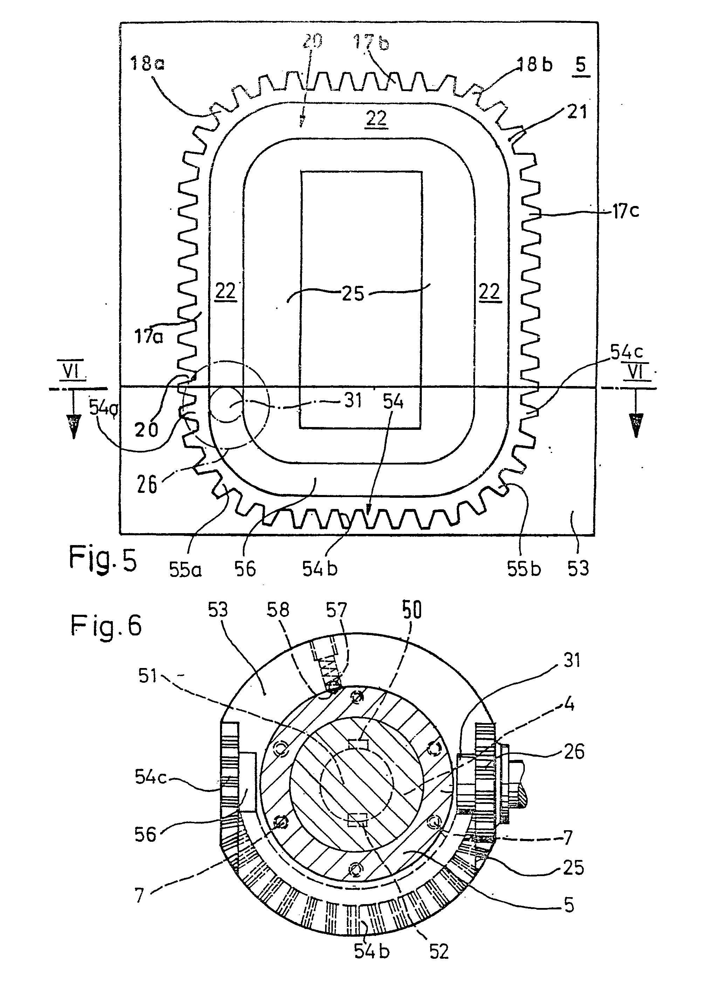

Wie das aus den Fig. 4 und 5 ersichtlich ist, sind bei diesem Ausführungsbeispiel die achsparallelen Zahnstangenschenkel 17a und 17c kürzer als beim Ausführungsbeispiel nach den Fig. 1 bis 3, so daß, wenn der Grundkörper 5 sich in seiner hinteren Stellung befindet, das Ritzel 26 aus dem entsprechenden Schenkel 17a oder 17c der U-förmigen Zahnstange 17 des Grundkörpers 5 ausgetreten ist. Da dadurch der Grundkörper 5 nicht mehr in der definierten Drehstellung durch die in die Rille 22 eingreifende Kurvenrolle 31 gehalten wird, ist hierfür eine Verriegelung des Grundkörpers 5 mit dem Lagerkörper 4 vorgesehen.

Diese Verriegelung besteht aus einem an der Greifervorrichtung 6 befestigten, zur Drehachse des Grundkörpers 5 koaxial angeordneten Zapfen 51, der eine sich axial erstreckende und radial vorstehende Leiste 52 trägt. In dem vorderen Ende des Lagerkörpers 4 ist eine ebenfalls zur Drehachse 13 des Grundkörpers 5 koaxiale Bohrung für den Eingriff des Zapfens 51 vorgesehen, die in ihrer zylindrischen Wand eine Nut 50 für den Eingriff der Leiste 52 aufweist, so daß bei der Axialverschiebung des Grundkörpers 5 aus seiner vorderen Stellung in seine hintere Stellung noch vor dem Austritt der Kurvenrolle 31 aus der Rille 22 der Zapfen 51 in die vordere Bohrung des Lagerkörpers 4 und damit die Leiste 52 in die in dieser Bohrung vorgesehene Nut 50 eingreift und die Greifervorrichtung 6 und damit der Grundkörper 5 mit dem Lagerkörper 4 durch diese Nut-Feder-Verriegelung 50, 52 verriegelt wird.

An seinem vorderen Ende ist der Grundkörper 5 auf einen Radius verjüngt, der kleiner ist als der Abstand des Rillenbodens 23 von der Drehachse 13. Dadurch werden die beiden axialen Schenkel 17a und 17c der Zahnstange 17 verkürzt. In dem sich durch diese Verkürzung gebildeten Zwischenraum zwischen dem vorderen Ende der Zahnstangenschenkel 17a und 17c und der Greifervorrichtung 6 ist auf dem verjüngten Ende des Grundkörpers 5 ein Ring 53 drehbar gelagert, der diesen ganzen Zwischenraum einnimmt. In diesem Ring 53 ist eine der Zahnstange 17 entsprechende Zahnstange 54 vorgesehen, die ebenfalls zwei sich axial erstreckende, jedoch kurze Schenkel 54a und 54c aufweist, die durch einen Zahnstangensteg 54b verbunden sind, der sich ebenso wie der Steg 17b längs einer zur Drehachse 13 senkrechten Ebene erstreckt und über Umlenkungen 55a und 55b in die Schenkel 54a und 54c übergeht.

Diese Zahnstange 54 ist ebenso innerhalb einer Nut im Ring 53 ausgebildet wie die Zahnstange 17 im Grundkörper 5 und weist im Nutengrund eine die Rille 22 bei einer Grundstellung des Ringes 53 fortsetzende, der Rille 22 entsprechende Führungsrille 56 auf. In dieser Grundstellung setzt die Zahnstange 54 die Zahnstange 17 fort, so daß ein geschlossener Zahnstangenring für das Ritzel 26 entsteht. Der Steg 54b der U-förmig gebogenen Zahnstange 54 ist so angeordnet, daß, wenn die Kurvenrolle 31 des Ritzels 26 in den längs dem Zahnstangensteg 54b verlaufenden Steg der U-förmigen Rille 56 eingreift, sich der Grundkörper 5 in der hinteren Stellung, nämlich in der Endlage des Werkzeugwechselvorganges befindet.

Wenn die Kurvenrolle 31 des Ritzels 26 sich im Eingriff mit der Rille 22 des Grundkörpers 5 befindet, könnte sich der Ring 53 frei um den Grundkörper 5 drehen. Damit jedoch der Ring 53 dann in der Grundstellung, in der die Zahnstangen 17 und 54 miteinander fluchten, lösbar festgehalten wird, ist eine Raste vorgesehen, die durch eine federbelastete Kugel 57 gebildet ist, die in eine sich axial erstreckende Rille 58 des Grundkörpers 5 eingreift.

Wie aus Fig. 4 ersichtlich ist, ist mit dem Ring 53 ein Antriebsglied 59 für das Schließen und Öffnen der nicht dargestellten Greifer vorgesehen, das über ein nicht dargestelltes Kurvengetriebe mit Raststellungen und eine ebenfalls nicht dargestellte, sinngemäß ausgebildete Steuerung mit den Greifern verbunden ist.

Die Arbeitsweise der Ausführungsform nach den Fig. 4 bis 6 entspricht im wesentlichen der Arbeitsweise des vorhergehenden Ausführungsbeispiels. Der Unterschied besteht darin, daß das Ritzel 26 nach Abschluß eines Werkzeugwechsels mit dem Zahnstangensteg 54b des Ringes 53 kämmt, der aus seiner Grundstellung, in der die Zahnstangenstege 17a und 17c des Grundkörpers 5 mit den Zahnstangenstegen 54a bzw. 54c des Ringes 53 fluchten, in eine Zwischenstellung gedreht ist, wobei durch diese Drehung in die Zwischenstellung die Greifer geöffnet werden. Außerdem ist bei dieser Ausführungsform kein Anschlag in der hinteren Stellung erforderlich, da die Lage des Grundkörpers 5 und damit die Lage der Greifer durch die Rille 56 und die Kurvenrolle 31 bestimmt wird. Durch die kreisbogenförmigen Umlenkungen 55a oder 58b wird ein welches Abbremsen erreicht.

Bei einem nächsten Arbeitswechsel dreht sich das Ritzel 26 in einem dem vorhergehenden Drehsinn entgegengesetzten Drehsinn, so daß sich der Ring 53 so lange dreht, bis das Ritzel mit einer der Umlenkungen 55a oder 55b kämmt und der Ring somit seine Grundstellung relativ zum Grundkörper 5 einnimmt. Durch diese Drehung werden die Greifer geschlossen, so daß die zu wechselnden Werkzeuge von den Greifern erfaßt werden. Beim weiteren Drehen des Ritzels wird der Grundkörper axial nach vorn bewegt und es erfolgt der Werkzeugwechsel wie bei dem vorhergehend beschriebenen Ausführungsbeispiel, nur daß am Ende des Rückhubes des Grundkörpers 5 das Ritzel wieder mit dem Zahnstangensteg 54b kämmt und den Ring 53 dreht, wodurch die Greifer geöffnet werden. Da der Drehsinn des Ritzels sich bei den aufeinanderfolgenden Wechselvorgängen immer in die entgegengesetzte Richtung ändert, bewirkt die Steuerung, die das Antriebsglied 59 mit den Greifern verbindet, jedesmal eine Umkehr der Wirkung des Antriebsgliedes 59 auf die Greifer, damit immer zu Beginn eines Werkzeugwechsels die Greifer geschlossen und am Ende des Werkzeugwechsels die Greifer geöffnet werden.

Zweckmäßigerweise kann in der Verbindung zwischen dem Antriebsglied 59 und den Greifern ein Kurvengetriebe mit Raststellungen verwendet werden.

Dadurch ist es lediglich erforderlich, daß der Ring eine Mindestdrehung für die Betätigung der Greifer ausführt, seine Bewegung aber nicht auf diese Mindestdrehung beschränkt ist, so daß der Antriebsmotor 47 des Ritzels 26 nicht bei einer exakt festgelegten Stellung des Ringes 53 angehalten werden muß.

**Patentansprüche**

1. Werkzeugwechsler für eine Werkzeugmaschine, insbesondere für ein Bohr- und Fräswerk, mit einem eine Greifervorrichtung (6) tragenden Grundkörper (5), der zum Herausziehen der von der Greifervorrichtung erfaßten Werkzeuge von einem Antrieb (47) aus einer hinteren Stellung in eine vordere Stellung axial verschiebbar, in dieser um seine Achse (13) drehbar und in der gedrehten Stellung zum Einsetzen der ausgewechselten Werkzeuge wieder in seine hintere Stellung zurück verschiebbar ist, wobei für die Axialbewegung des Grundkörpers (5) an diesem eine Zahnstange (17) vorhanden ist, die mit einem Ritzel (26) kämmt, das vom Antrieb (47) antreibbar ist, dadurch gekennzeichnet, daß die Zahnstange (17) entsprechend der gewünschten Axial- und Drehbewegung des Grundkörpers (5) geformt ist und daß für das Ritzel (26) eine Führung (22) vorhanden ist, die das Ritzel (26) im Eingriff mit der Zahnstange hält.

2. Werkzeugwechsler nach Anspruch 1, dadurch gekennzeichnet, daß der Grundkörper (5) auf einem Lagerkörper (4) dreh- und axial verschiebbar gelagert ist.

3. Werkzeugwechsler nach Anspruch 1 oder 2, dadurch gekennzeichnet, daß die Zahnstange (17) U-förmig ist und zwei zur Drehachse (13) des Grundkörpers (5) parallele gleichlange Schenkel (17a, 17c) aufweist, die an ihrem, der Greifervorrichtung (6) abgekehrten hinteren Ende durch einen Zahnstangensteg (17b) verbunden sind.

4. Werkzeugwechsler nach Anspruch 3, dadurch gekennzeichnet, daß eine Vorrichtung (50, 52) vorhanden ist, die die Drehbewegung des Grundkörpers (5) in seiner hinteren Stellung verhindert, daß für den Eingriff des Ritzels (26) bei der hinteren Stellung des Grundkörpers eine zweite U-förmig gebogene Zahnstange (54) vorhanden ist, die an einem Ring (53) angeordnet ist, der drehbar und axial unverschiebbar mit dem Grundkörper (5) verbunden ist und für den eine Grundstellung vorgesehen ist, in der die axial verlaufenden Schenkel (54a, 54c) der zweiten Zahnstange (54) mit den Schenkeln (17a und 17c) der Zahnstange (17) des Grundkörpers (5) fluchten, und daß die beiden Zahnstangen (17, 54) so dimensioniert sind, daß das Ritzel (26) mit dem sich längs einer zur Drehachse (13) des Grundkörpers (5) senkrechten Ebene erstreckenden Steg (54b) der zweiten Zahnstange (54) kämmt, wenn sich der Grundkörper (5) in seiner hinteren Stellung befindet.

5. Werkzeugwechsler nach Anspruch 4, dadurch gekennzeichnet, daß der Ring (53) ein Antriebsglied (59) für das Schließen und Öffnen der Greifer aufweist.

6. Werkzeugwechsler nach Anspruch 4 oder 5, dadurch gekennzeichnet, daß zum Verhindern der Drehung des Grundkörpers (5) in seinen hinteren Stellungen, in denen das Ritzel (26) die Zahnstange (17) des Grundkörpers verlassen hat, eine Nut-Feder-Verriegelung (50, 52) zwischen dem Grundkörper (5) und dem Lagerkörper (4) vorgesehen ist.

7. Werkzeugwechsler nach einem der Ansprüche 4 bis 6, dadurch gekennzeichnet, daß zum lösbaren Festhalten des Ringes in seiner Grundstellung eine Raste (57, 58) vorgesehen ist.

8. Werkzeugwechsler nach einem der Ansprüche 1 bis 7, dadurch gekennzeichnet, daß die Zahnstange (17, 54) an einer Seitenwand einer U-förmigen Nut (20) ausgebildet ist.

9. Werkzeugwechsler nach einem der Ansprüche 1 bis 8, dadurch gekennzeichnet, daß für den Grundkörper (5) in seiner hinteren Stellung ein Anschlag vorhanden ist.

10. Werkzeugwechsler nach einem der Ansprüche 1 bis 9, dadurch gekennzeichnet, daß neben der Zahnstange (17, 54) eine Rille (22, 56) für den Eingriff eines Führungskörpers für das Ritzel (26) vorhanden ist.

11. Werkzeugwechsler nach Anspruch 10, dadurch gekennzeichnet, daß als Führungskörper eine koaxial zum Ritzel (26) gelagerte Kurvenrolle (31) vorgesehen ist.

12. Werkzeugwechsler nach einem der Ansprüche 3 bis 11, dadurch gekennzeichnet, daß der Zahnstangensteg (17b, 54b) sich kreisbogenförmig um 180° längs einer zur Drehachse (13) des Grundkörpers (5) senkrechten Ebene erstreckt.

13. Werkzeugwechsler nach einem der Ansprüche 1 bis 12, dadurch gekennzeichnet, daß für das Ritzel (26) ein Antrieb (47, 32a, 32b, 41) vorhanden ist, der dem Ritzel eine ungleichförmige Bewegung erteilt, so daß die Axial- und Schwenkbewegungen des Grundkörpers (5) schnell und die Durchlaufgeschwindigkeit des Ritzels in den Umlenkungen (18a, 18b) langsam sind.

14. Werkzeugwechsler nach Anspruch 13, dadurch gekennzeichnet, daß der Antrieb (47, 32a, 32b, 41) zur Erzeugung der ungleichförmigen Rotationsgeschwindigkeit des Ritzels (26) ein Getriebe aufweist.

15. Werkzeugwechsler nach Anspruch 14, dadurch gekennzeichnet, daß das Getriebe als Ovalrädergetriebe ausgebildet ist.

16. Werkzeugwechsler nach einem der Ansprüche 1 bis 15, dadurch gekennzeichnet, daß eine Sensorik, mittels deren die durch auszuwechselnde Werkzeuge verursachte Lastaufnahme des Grundkörpers (5) meßbar ist, und eine durch die Sensorik beeinflußbare Steuerung vorhanden sind, so daß beim Wechsel schwerer Werkzeuge der Antrieb des Ritzels (26) dem Trägheitsmoment der auszuwechselnden Werkzeuge anpaßbar ist.

17. Werkzeugwechsler nach Anspruch 16, dadurch gekennzeichnet, daß die Sensorik auf dem Lagerkörper (4) angebracht ist.

**Revendications**

1. Dispositif de changement d'outil destiné à une machine outil, en particulier à une aléseuse-fraiseuse comportant un corps de base (5) portant un dispositif de saisie (6) qui peut être déplacé axialement en vue d'extraire d'un dispositif d'entraînement (47) les outils saisis par le dispositif de saisie, à partir d'une position arrière jusque dans une position avant, être tourné sur son axe (13) dans cette position, et être ramené à nouveau dans sa position arrière dans la position tournée en vue de la mise en place des outils qu'il s'agit d'échanger, une crémaillère (17) existant sur le corps de base (5) pour le déplacement axial de celui-ci, laquelle crémaillère (17) est engrenée par un piston (26) qui est susceptible d'être entraîné par le dispositif d'entraînement (47), caractérisé par le fait que la crémaillère (17) a une forme qui correspond au déplacement axial et rotatif souhaité pour le corps de base (5) et qu'il existe pour le pignon (26) un guidage (22) qui maintient le pignon en prise avec la crémaillère.

2. Dispositif de changement d'outil selon la revendication 1, caractérisé par le fait que le corps de base (5) est monté de manière à pouvoir se déplacer en rotation et axialement sur un corps de support (4).

3. Dispositif de changement d'outil selon la revendication 1 ou 2, caractérisé par le fait que la crémaillère (17) est en forme de U et présente deux branches (17a, 17c) d'égale longueur parallèles à l'axe de rotation (13) du corps de base (5) qui sont reliées à leur extrémité arrière située à l'opposé du dispositif de saisie (6), par une partie de liaison (17b) de crémaillère.

4. Dispositif de changement d'outil selon la revendication 3, caractérisé par le fait qu'il existe un dispositif (50, 52) qui empêche le mouvement de rotation du corps de base (5) lorsqu'il se trouve en position arrière, que pour l'engrenage du pignon (26) lorsque le corps de base se trouve dans la position arrière, il existe une deuxième crémaillère (54) en forme de U, qui est disposée sur un anneau (53) lequel est relié au corps de base (5) de façon rotative et de façon à ne pas pouvoir se déplacer axialement et pour lequel est prévue une position de base dans laquelle les branches (54a, 54c) de la deuxième crémaillère (54) qui s'étendent axialement, sont en alignement avec les deux branches (17a et 17c) de la crémaillère (17) du corps de base (5) et que les deux crémaillères (17, 54) sont dimensionnées de façon telle que le pignon (26) engrène avec la partie de liaison (54b), qui s'étend dans un plan perpendiculaire à l'axe de rotation (13) du corps de base (5), et qui appartient à la deuxième crémaillère (54). lorsque le corps de base (6) se trouve dans sa position arrière.

5. Dispositif de changement d'outil selon la revendication 4, caractérisé par le fait que l'anneau (53) présente un élément d'entraînement (59) destiné à la fermeture et à l'ouverture des éléments de saisie.

6. Dispositif de changement d'outil selon la revendication 4 ou 5, caractérisé par le fait qu'en vue d'empêcher la rotation du corps (5) dans ses positions arrière dans lesquelles le pignon (26) a quitté la crémaillère (17) du corps de base, on prévoit un verrouillage (50, 52) à nervure et gorge entre le corps de base (5) et le corps de support (4).

7. Dispositif de changement d'outil selon l'une des quelconque des revendications 4 à 6, caractérisé par le fait qu'en vue du maintien fixe libérable du pignon dans sa position de base, on prévoit un cliquet (57, 58).

8. Dispositif de changement d'outil selon l'une des revendications 1 à 7, caractérisé par le fait que la crémaillère (17, 54) est conformée dans la paroi latérale d'une gorge (20) en forme de U.

9. Dispositif de changement d'outil selon l'une des revendications 1 à 8. caractérisé par le fait qu'il existe une butée pour le corps de base (5) dans sa position arrière.

10. Dispositif de changement d'outil selon l'une des revendications 1 à 9, caractérisé par le fait qu'à côté de la crémaillère (17, 54) il existe une rainure (22, 56) destiné à la pénétration d'un corps de guidage destiné au pignon (26).

11. Dispositif de changement d'outil selon la revendication 10, caractérisé par le fait qu'un galet (31) de came monté coaxialement au pignon (26) est prévu en tant que corps de guidage.

12. Dispositif de changement d'outil selon l'une des revendications 3 à 11, caractérisé par le fait que la partie de liaison (17b, 54b) des crémaillères s'étend en forme d'arc-de-cercle sur 180° dans un plan perpendiculaire à l'axe de rotation (13) du corps de base (5).

13. Dispositif de changement d'outil selon l'une des revendications 1 à 12, caractérisé par le fait qu'un dispositif d'entraînement (47, 32a, 32b, 41) existe pour le pignon (26), lequel imprime au pignon un mouvement non uniforme, de façon telle que les déplacements axiaux et de pivotement du corps de base (5) sont rapides, tandis que la vitesse de passage du pignon dans les changements de direction (18a, 18b), est faible.

14. Dispositif de changement d'outil selon la revendication 13, caractérisé par le fait que le dispositif d'entraînement (47, 32a, 32b, 41) présente un engrenage destiné à produire une vitesse de déplacement non uniforme du pignon (26).

15. Dispositif de changement d'outil selon la revendication 14, caractérisé par le fait que l'engrenage est constitué par un engrenage à roues ovales.

16. Dispositif de changement d'outil selon l'une des revendications 1 à 15, caractérisé par le fait qu'il existe un ensemble de capteurs au moyen duquel on peut mesurer la charge subie par le corps de base (5) du fait de l'existence des outils qu'il s'agit d'échanger, et le dispositif de commande influençable par l'ensemble de capteurs, de façon telle que lors de l'échange d'outils lourds, le dispositif d'entraînement du pignon (26) soit susceptible d'être adapté au couple de porte-à-faux des outils qu'il s'agit d'échanger.

17. Dispositif de changement d'outil selon la revendication 16, caractérisé par le fait que l'ensemble de capteurs est monté sur le corps de support (4).

**Claims**

1. A tool changer for a machine tool, particularly for a boring, drilling and milling machine and comprising, carrying a gripper device (6), a basic body (5), which, for withdrawal of the tools held by the gripper device, is axially displaceable by a drive (47) out of a rear position into a forward position, in which it is rotatable about its axis (13) and, while in the rotated position, is displaceable back into its rear position for insertion of the exchanged tools, there being provided, for the axial movement of the basic body (5), a rack (17) disposed on the basic body and meshing with a pinion (26) which is adapted to be driven by the drive (47), characterised in that the rack (17) is shaped according to the desired axial and rotary movement of the basic body (5) and in that for the pinion (26) a guide (22) is provided which maintains the pinion (26) in engagement with the rack.

2. A tool changer according to Claim 1, characterised in that the basic body (5) is mounted for rotation and axial displacement on a bearing member (4).

3. A tool changer according to Claim 1 or 2, characterised in that the rack (17) is U-shaped and has, parallel with the axis of rotation (13) of the basic body (5), two equally long arms (17a, 17c) of which the rear ends, remote from the gripper device (6), are connected by a crosspiece (17b) of the rack.

4. A tool changer according to Claim 3, characterised in that a device (50, 52) is provided which prevents rotary movement of the basic body (5) into its rear position and in that for engagement of the pinion (26) in the rear position of the basic body, a second U-shaped rack (54) is provided which is disposed on a ring (53) which is rotatably and axially immovably connected to the basic body (5) and for which a basic position is envisaged in which the axially extending arms (54a, 54c) of the second rack (54) are aligned with the arms (17a and 17c) of the rack (17) on the basic body (5) and in that the two racks (17, 54) are so dimensioned that, when the basic body (5) is in its rear position, the pinion (26) meshes with the second rack (54) on the crosspiece (54b) which extends along a plane at right-angles to the axis of rotation (13) of the basic body (5).

5. A tool changer according to Claim 4, characterised in that the ring (53) has a driving member (59) for closing and opening the grippers.

6. A tool changer according to Claim 4 or 5, characterised in that to prevent rotation of the basic body (5) in its rear positions in which the pinion (26) has quit the rack (17) of the basic body, a tongue-and-groove interlock arrangement (50, 52) is provided between the basic body (5) and the bearing member (4).

7. A tool changer according to one of Claims 4 to 6, characterised in that a detent (57, 58) is provided for the releasable maintenance of the ring in its basic position.

8. A tool changer according to one of Claims 1 to 7, characterised in that the rack (17, 54) is constructed on a side wall of a U-shaped groove (20).

9. A tool changer according to one of Claims 1 to 8, characterised in that an abutment is provided to arrest the basic body (5) in its rear position.

10. A tool changer according to one of Claims 1 to 9, characterised in that in addition to the rack (17, 54), a groove (22, 56) is provided for engagement of a guide member for the pinion (26).

11. A tool changer according to Claim 10, characterised in that a cam roller (31) is provided as a guide member and is mounted coaxially with the pinion (26).

12. A tool changer according to one of Claims 3 to 11, characterised in that the rack crosspiece (17b, 54b) extends arcuately through 180° along a plane at right-angles to the axis of rotation (13) of the basic body (5).

13. A tool changer according to one of Claims 1 to 12, characterised in that there is provided for the pinion (26) a drive (47, 32a, 32b, 41) which imparts a non-uniform movement to the pinion so that the axial and pivoting movements of the basic body (5) are fast while the speed of the pinion as it passes through the changes of direction (18a, 18b) are slow.

14. A tool changer according to Claim 13, characterised in that the drive (47, 32a, 32b, 41) comprises a gear arrangement for producing the non-uniform speed of rotation of the pinion (26).

15. A tool changer according to Claim 14, characterised in that the gear mechanism is constructed as an oval wheel gear mechanism.

16. A tool changer according to one of Claims 1 to 15, characterised in that a sensor analysis facility is provided by means of which it is possible to measure the loading on the basic body (5) caused by the tools to be changed, and also a control arrangement is provided which can be influenced by the sensor analysis so that when changing heavy tools the drive of the pinion (26) is adaptable to the moment of inertia of the tools which are to be changed.

17. A tool changer according to Claim 15, characterised in that the sensor analysis is mounted on the bearing member (4).

# Fig.1

Fig.2

Fig.3

Fig.4

Fig. 5

Fig. 6